# EUROPEAN PATENT APPLICATION

(11) **EP 4 756 995 A1**
(43) Date of publication of application: **10.06.2026**
(21) Application number: 25214827.5
(22) Date of filing: 11.11.2025
(51) Int. Cl.: H01M 10/613, H01M 10/625, H01M 10/6552, H01M 10/6556, H01M 50/209, H01M 50/30, H01M 50/367, H01M 10/6557, H01M 10/6567

(54) **POWER STORAGE DEVICE**

(30) Priority: 06.12.2024 JP 2024213270
(71) Applicant: TOYOTA JIDOSHA KABUSHIKI KAISHA, Toyota-shi, Aichi-ken 471-8571 (JP)
(72) Inventor: YAMASHITA, Osamu, Toyota-shi, 471-8571 (JP); MORI, Shinichiro, Toyota-shi, 471-8571 (JP); SHIMIZU, Koji, Toyota-shi, 471-8571 (JP); FUJISHIMA, Seigo, Toyota-shi, 471-8571 (JP); KITO, Sumiko, Toyota-shi, 471-8571 (JP); ISHIKAWA, Shinya, Toyota-shi, 471-8571 (JP); TOMITA, Shintaro, Toyota-shi, 471-8571 (JP); YAMASHITA, Yuji, Toyota-shi, 471-8571 (JP); KIMURA, Kenta, Toyota-shi, 471-8571 (JP)
(74) Representative: TBK

(57) **Abstract**

A power storage device includes a plurality of power storage elements (29), a heat exchange plate (32) disposed between the plurality of power storage cells (29) so as to face respective long side surfaces of the plurality of power storage cells (29) and extending in a long-side direction of the long side surface, a main supply pipe (37A) through which a coolant flows to the heat exchange plate (32), and a housing case (10) that houses the plurality of power storage cells (29), the heat exchange plate, and the main supply pipe (37A). The housing case (10) is provided with a partition wall (22) disposed between the main supply pipe (37A) connected to the heat exchange plate (32) and the power storage cell (29) when viewed in an up-down direction.

## Description

### CROSS REFERENCE TO RELATED APPLICATIONS

This nonprovisional application is based on Japanese Patent Application No. 2024-213270 filed on December 6, 2024 with the Japan Patent Office, the entire contents of which are hereby incorporated by reference.

### BACKGROUND

### Field

The present disclosure relates to a power storage device.

### Description of the Background Art

Various techniques related to power storage devices have been proposed to date. For example, Japanese Patent Laying-Open No. 2021-12864 discloses a power storage device that includes a housing, a battery cell assembly disposed in the housing and including a plurality of battery cells, and a heat exchange system. The heat exchange system includes a heat exchanger and a connection pipe.

### SUMMARY

When in the heat exchange system of the power storage device configured as described above, a coolant flowing inside leaks from a connection portion between the heat exchanger and the connection pipe, the coolant may adhere to a power storage element included in the power storage device.

An object of the present disclosure is to provide a power storage device in which adhesion of a coolant used in a heat exchange system to a power storage element is hindered.

A power storage device according to an aspect of the present disclosure includes a plurality of power storage elements, a heat exchanger disposed between the plurality of power storage elements so as to face respective long side surfaces of the plurality of power storage elements and extending in a long-side direction of the long side surface, a coolant pipe through which a coolant flows to the heat exchanger, and a housing that houses the plurality of power storage elements, the heat exchanger, and the coolant pipe. The housing is provided with a partition wall disposed between the coolant pipe connected to the heat exchanger and the power storage element when viewed in an up-down direction.

According to this configuration, in the housing, the partition wall is disposed between the coolant pipe and the power storage element when viewed in the up-down direction. Thus, even when the coolant leaks from a connection portion between the coolant pipe and the heat exchanger for instance, adhesion of the coolant to the power storage element can be hindered by the partition wall.

In an embodiment, a first through hole is formed in a bottom surface of the housing lying opposite the plurality of power storage elements with the partition wall interposed in between.

According to this configuration, even when the coolant leaks from the connection portion between the coolant pipe and the heat exchanger for instance, the coolant can be discharged from the first through hole, and thus, adhesion of the coolant to the power storage element can be hindered more reliably.

Moreover, in an embodiment, the power storage device further includes a protection member formed so as to cover a lower surface of the housing. The power storage element includes a safety valve provided on a lower surface of the power storage element. In the housing, a second through hole is formed under the safety valve.

According to this configuration, the plurality of through holes are provided in the housing, and thus, when the gas discharged from the power storage element flows out from the safety valve, the gas can be caused to flow between the protection member and the housing through the second through hole.

Moreover, in an embodiment, the partition wall includes an inclined portion formed so as to be inclined toward the first through hole.

According to this configuration, the coolant that has leaked from the connection portion between the cooling pipe and the heat exchanger, for instance, can be guided to the first through hole using the inclined portion, and thus, adhesion of the coolant to the power storage element can be hindered.

Moreover, in an embodiment, a connection portion between the heat exchanger and the coolant pipe is arranged so as to overlap the inclined portion when viewed in the up-down direction.

According to this configuration, the coolant that has leaked from the connection portion between the heat exchanger and the cooling pipe, for instance, can be guided to the first through hole using the inclined portion, and thus, adhesion of the coolant to the power storage element can be hindered.

Moreover, in an embodiment, the inclined portion includes a groove formed in the bottom surface of the housing lying opposite the plurality of power storage elements with the partition wall interposed in between.

According to this configuration, even when the coolant leaks, the coolant can be guided to the first through hole using the groove formed in the bottom surface of the housing, and thus, adhesion of the coolant to the power storage element can be hindered.

Moreover, in an embodiment, the inclined portion includes a projecting portion formed on the bottom surface of the housing lying opposite the plurality of power storage elements with the partition wall interposed in between.

According to this configuration, even when the coolant leaks, the coolant can be guided to the first through hole using the groove formed by the projecting portion on the bottom surface of the housing, and thus, adhesion of the coolant to the power storage element can be hindered.

Moreover, in an embodiment, the power storage device further includes a discharge passage through which gas discharged from the plurality of power storage elements is discharged. The first through hole is connected to the discharge passage.

According to this configuration, the first through hole is connected to the discharge passage, and in case of leakage of the coolant, the coolant that has leaked is stored in a space of the discharge passage. Thus, the coolant can be hindered from inflicting an adverse effect on the power storage cell.

The foregoing and other objects, features, aspects, and advantages of the present disclosure will become apparent from the following detailed description on the present disclosure, which will be understood in conjunction with the accompanying drawings.

### BRIEF DESCRIPTION OF THE DRAWINGS

Fig. 1 is a diagram schematically illustrating a vehicle 1 on which a power storage device 2 is mounted.
Fig. 2 is an exploded perspective view illustrating power storage device 2.
Fig. 3 is a perspective view illustrating a power storage cell 29.
Fig. 4 is a plan view illustrating a cooling unit 12 and the like.
Fig. 5 is a perspective view illustrating cooling unit 12.
Fig. 6 is a cross-sectional view illustrating a heat exchange plate 32.
Fig. 7 is a cross-sectional view along line VII-VII in Fig. 4.
Fig. 8 is a cross-sectional view along line VIII-VIII in Fig. 4.
Fig. 9 is a diagram illustrating an example of a cross section of a power storage device 2A according to a variation.
Fig. 10 is a diagram illustrating an example of a cross section of a power storage device 2B according to a variation.
Fig. 11 is a diagram illustrating an example of a cross section of a power storage device 2C according to a variation.
Fig. 12 is a diagram illustrating an example of a cross section of a power storage device 2D according to a variation.
Fig. 13 is a diagram illustrating an example of a cross section of a power storage device 2E according to a variation.
Fig. 14 is a diagram illustrating an example of a cross section of a power storage device 2F according to a variation.
Fig. 15 is a diagram illustrating an example of a cross section of a power storage device 2G according to a variation.
Fig. 16 is a diagram illustrating an example of a cross section of a power storage device 2H according to a variation.
Fig. 17 is a diagram illustrating an example of a cross section of a power storage device 2I according to a variation.

### DESCRIPTION OF THE PREFERRED EMBODIMENTS

Embodiments of the present disclosure are described in detail below with reference to the drawings. In the drawings, the same or corresponding portions are denoted by the same reference characters, which will not be described repeatedly.

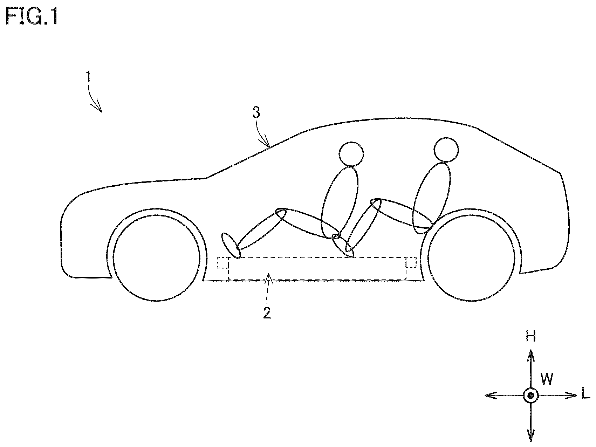

Fig. 1 is a diagram schematically illustrating a vehicle 1 on which a power storage device 2 is mounted. Vehicle 1 includes a vehicle body 3, and power storage device 2 is mounted on a bottom portion of vehicle body 3.

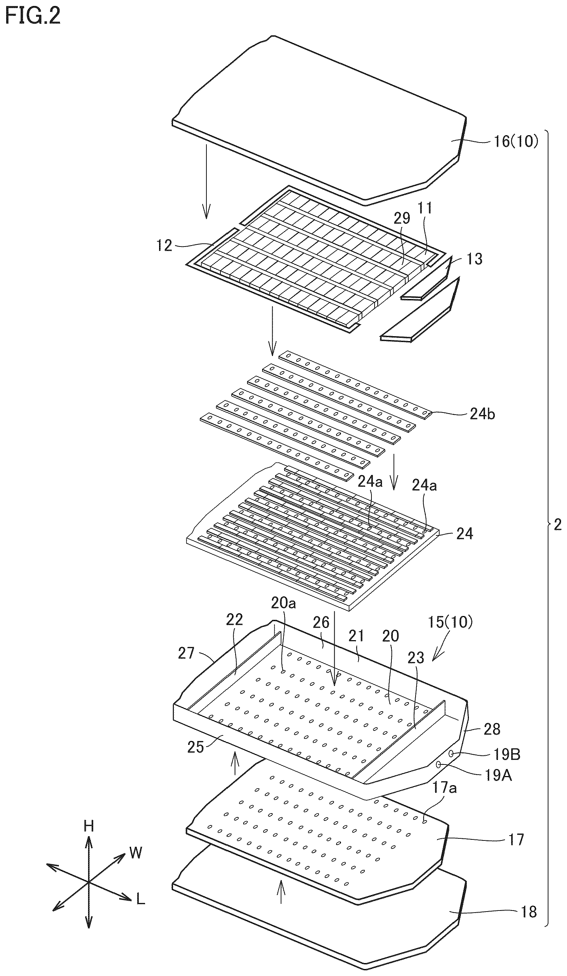

Fig. 2 is an exploded perspective view illustrating power storage device 2. In Fig. 2, a width direction W is a width direction of power storage device 2 and is also a vehicle width direction of vehicle 1. In Fig. 2, a front-rear direction L is a front-rear direction of power storage device 2 and is also a front-rear direction of vehicle 1. In Fig. 2, an up-down direction H is an up-down direction of power storage device 2 and is also an up-down direction of vehicle 1. The same applies to width direction W, front-rear direction L, and up-down direction H in the other drawings. Thus, detailed descriptions thereof are not repeated.

Power storage device 2 includes a housing case 10, a power storage module 11, a cooling unit 12, and an electric device 13. Housing case 10 is the housing of power storage device 2, which includes a lower case 15, an upper case 16, an insulating plate 17, and a share panel 18.

Lower case 15 is formed so as to open upward, and upper case 16 is provided so as to close an opening of lower case 15.

Lower case 15 includes a bottom plate 20, a peripheral wall 21, partition walls 22 and 23, and an insulating plate 24.

Bottom plate 20 is formed in a plate shape. Peripheral wall 21 is formed along an outer peripheral edge portion of bottom plate 20. Peripheral wall 21 includes a side wall 25, a side wall 26, an end plate 27, and an end plate 28.

Side wall 25 and side wall 26 are arranged in width direction W, and side wall 25 and side wall 26 are formed so as to extend in front-rear direction L.

End plate 27 and end plate 28 are provided apart from each other in front-rear direction L, and end plate 27 and end plate 28 are formed so as to extend in width direction W. End plate 27 connects one end of side wall 25 and one end of side wall 26, and end plate 28 connects the other end of side wall 25 and the other end of side wall 26.

Each of side wall 25, side wall 26, end plate 27, and end plate 28 is provided with a fixing portion, which is described later, and each of the fixing portions is fixed to vehicle body 3.

Partition wall 22 and partition wall 23 are disposed in a region surrounded by bottom plate 20 and peripheral wall 21. Partition wall 22 is disposed so as to be adjacent to end plate 27, and partition wall 22 is formed so as to extend in width direction W.

Partition wall 23 is disposed apart from end plate 28 in front-rear direction L. End plate 28 is also formed so as to extend in width direction W.

End plate 28 is provided with respiratory membranes 19A and 19B. Respiratory membrane 19A and respiratory membrane 19B are waterproof breathable membranes, and for instance, respiratory membranes 19A and 19B are each formed of a GORE-TEX material or the like.

Insulating plate 24 is disposed on a portion of an upper surface of bottom plate 20 that is situated between partition wall 22 and partition wall 23. A plurality of openings 24a are formed in insulating plate 24. Insulating plate 24 is provided with an insulating protector 24b that closes these openings 24a.

Insulating plate 17 is fixed to a lower surface of bottom plate 20, and also, a plurality of openings 17a are formed in insulating plate 17.

In addition, a plurality of openings 20a are formed in bottom plate 20. Openings 24a, openings 20a, and openings 17a are arranged in the up-down direction relative to each other. Each of opening 17a, opening 20a, and opening 24a is a hole that penetrates in up-down direction H. Opening 17a, opening 20a, and opening 24a are provided so that a through hole is formed under a smoke discharge valve (safety valve) 6 of a power storage cell 29. When gas flows out from the smoke discharge valve and flows to a lower surface of insulating plate 17, the gas is discharged with the space between insulating plate 17 and share panel 18 serving as a discharge passage. Opening 17a, opening 20a, and opening 24a described above are just needed to be through holes formed so as to penetrate insulating plate 17, bottom plate 20, and insulating plate 24, respectively, and are not limited to what penetrates from opening 24a to opening 17a. For instance, at least one of opening 17a, opening 20a, and opening 24a may be covered with a material having thermal insulation properties, such as a mica sheet or silica cloth.

Share panel 18 is disposed under insulating plate 17, and an outer peripheral edge portion of share panel 18 is fixed to the lower surface of bottom plate 20. Share panel 18 is formed so as to cover insulating plate 17 and the lower surface of bottom plate 20.

Power storage module 11 is disposed over an upper surface of insulating plate 24. Electric device 13 is disposed between partition wall 23 and end plate 28.

Power storage module 11 includes the plurality of power storage cells 29. The plurality of power storage cells 29 are arranged at intervals in front-rear direction L and arranged at intervals in width direction W. Power storage cell 29 may be configured by a nickel-metal hydride battery or a lithium ion battery, or may be configured by a power storage element, such as a capacitor.

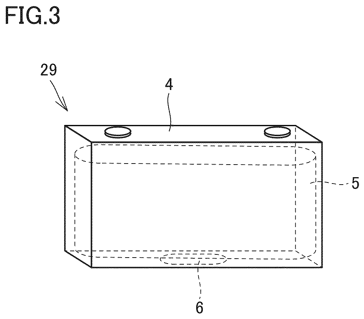

Fig. 3 is a perspective view illustrating power storage cell 29. Power storage cell 29 includes a cell case 4 and an electrode assembly 5 housed in cell case 4. Cell case 4 includes a bottom plate, and smoke discharge valve (safety valve) 6 is formed on the bottom plate of cell case 4. Each of power storage cells 29 is disposed so that smoke discharge valve 6 is situated over opening 24a of insulating plate 24 illustrated in Fig. 2.

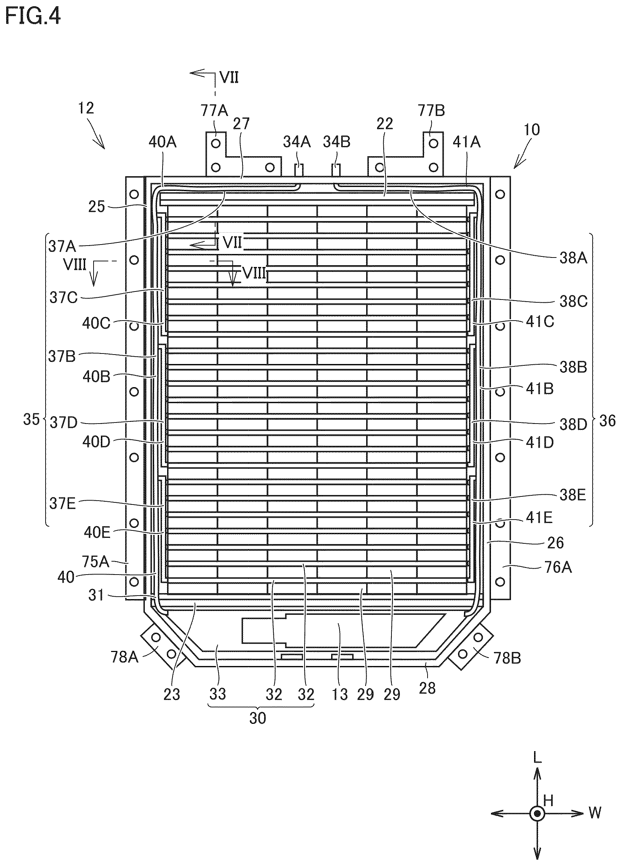

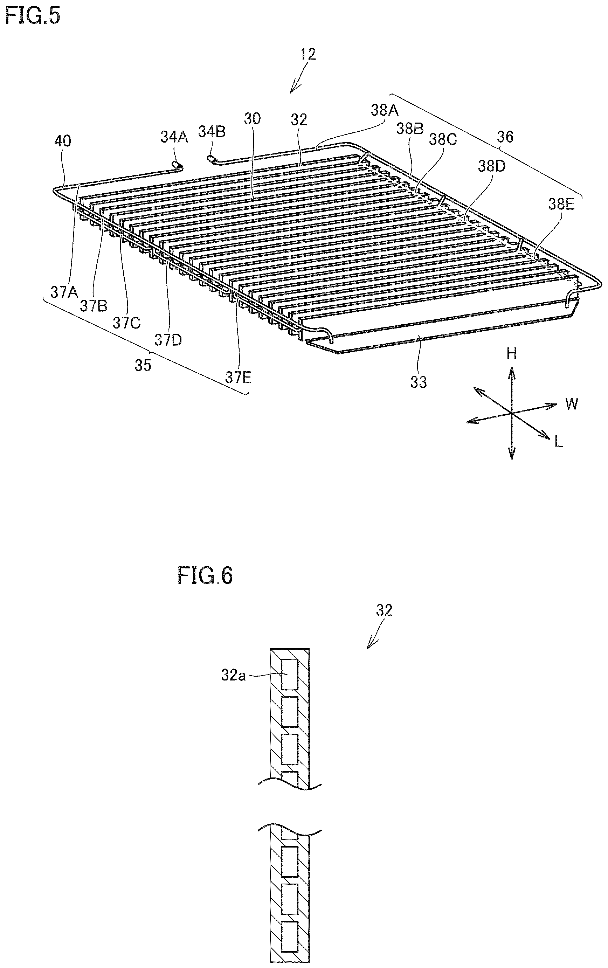

Fig. 4 is a plan view illustrating cooling unit 12 and the like. Fig. 5 is a perspective view illustrating cooling unit 12. In Fig. 5, power storage cell 29 and the like are not illustrated.

Referring to Figs. 4 and 5, cooling unit 12 includes a heat exchange unit 30, a coolant pipe 31, and a thermal insulation member 40. Heat exchange unit 30 includes a plurality of heat exchange plates 32 and a heat exchange plate 33.

The plurality of heat exchange plates 32 are disposed at intervals in front-rear direction L. Each of heat exchange plates 32 is disposed so as to extend in width direction W.

The plurality of power storage cells 29 arranged in width direction W are disposed between heat exchange plates 32 adjacent to each other in front-rear direction L. Fig. 6 is a cross-sectional view illustrating heat exchange plate 32. As illustrated in Fig. 6, a plurality of flow passages 32a of a coolant are formed at intervals in heat exchange plate 32 in up-down direction H.

Referring again to Figs. 4 and 5, coolant pipe 31 is disposed in housing case 10, and coolant pipe 31 includes a supply pipe 35 and a discharge pipe 36.

Supply pipe 35 is connected to a supply portion 34A, and supply portion 34A is inserted into an insertion hole formed in end plate 27 and fixed to end plate 27.

Supply pipe 35 includes a main supply pipe 37A, a main supply pipe 37B, and branch pipes 37C, 37D, and 37E.

Main supply pipe 37A is disposed between partition wall 22 and end plate 27 so as to extend in width direction W and formed so as to extend toward side wall 25.

Main supply pipe 37B is connected to an end portion of main supply pipe 37A and formed so as to extend in front-rear direction L along side wall 25.

Each of branch pipes 37C, 37D, and 37E is disposed below main supply pipe 37B and connected to main supply pipe 37B. Branch pipes 37C, 37D, and 37E are disposed at intervals in front-rear direction L.

Connection portions between main supply pipe 37B and branch pipes 37C, 37D, and 37E are provided at intervals in front-rear direction L.

The plurality of heat exchange plates 32 disposed at intervals in front-rear direction L are connected to branch pipe 37C. Similarly, the plurality of heat exchange plates 32 disposed at intervals in front-rear direction L are also connected to branch pipes 37D and 37E.

Heat exchange plate 33 is connected to an end portion of main supply pipe 37B on the end plate 28 side. Heat exchange plate 33 is disposed on a portion of the upper surface of bottom plate 20 that is situated between partition wall 23 and end plate 28. An insulating plate is disposed between heat exchange plate 33 and bottom plate 20. Electric device 13 is disposed on an upper surface of heat exchange plate 33. Electric device 13 includes, for instance, a battery ECU, a junction box, and the like.

Discharge pipe 36 includes a main discharge pipe 38A, a main discharge pipe 38B, and branch pipes 38C, 38D, and 38E.

Discharge pipe 36 is connected to discharge portion 34B, and discharge portion 34B is inserted into an insertion hole formed in end plate 27 and fixed to end plate 27. The two insertion holes of end plate 27 are formed apart from each other in width direction W.

Main discharge pipe 38A is disposed between partition wall 22 and end plate 27 so as to extend in width direction W and formed so as to extend toward side wall 26.

Main discharge pipe 38B is connected to an end portion of main discharge pipe 38A and formed so as to extend along side wall 26.

Each of branch pipes 38C, 38D, and 38E is disposed below main discharge pipe 38B and connected to main discharge pipe 38B. Branch pipes 38C, 38D, and 38E are disposed at intervals in front-rear direction L.

The plurality of heat exchange plates 32 disposed at intervals in front-rear direction L are connected to branch pipe 38C. Similarly, the plurality of heat exchange plates 32 disposed at intervals in front-rear direction L are also connected to branch pipes 38D and 38E. Heat exchange plate 33 is connected to an end portion of main discharge pipe 38B on the end plate 28 side.

Thermal insulation member 40 includes thermal insulation members 40A, 40B, 40C, 40D, and 40E, and thermal insulation members 41A, 41B, 41C, 41D, and 41E.

Thermal insulation member 40A covers main supply pipe 37A. Furthermore, thermal insulation member 40A is formed so as to cover a connection portion of main supply pipe 37A and main supply pipe 37B, which is included in main supply pipe 37A.

Thermal insulation member 40B covers main supply pipe 37B. Similarly, thermal insulation members 40C, 40D, and 40E cover branch pipes 37C, 37D, and 37E, respectively. Thermal insulation members 41A and 41B cover main discharge pipes 38A and 38B, respectively, and thermal insulation members 41C, 41D, and 41E cover branch pipes 38C, 38D, and 38E, respectively.

As illustrated in Fig. 4, a fixing portion 75A is formed on an outer surface of side wall 25, and similarly, a fixing portion 76A is formed on an outer surface of side wall 26.

Fixing portions 77A and 77B are formed on an outer surface of end plate 27, and fixing portions 78A and 78B are formed on an outer surface of end plate 28.

Fixing portions 77A and 77B are fixed to vehicle body 3 by fastening members. For instance, vehicle body 3 includes side sills disposed apart from each other in width direction W, a cross member connecting the side sills, and a floor panel, and fixing portions 77A and 77B are fixed to the cross member. Fixing portions 77A and 77B may be fixed to the floor panel.

Fixing portion 75A is formed so as to project in width direction W from the outer surface of side wall 25. Fixing portion 76A is formed so as to project in width direction W from the outer surface of side wall 26. Fixing portions 75A and 76A are fixed to the side sills of vehicle body 3 by fastening members.

Referring to Fig. 4, when power storage module 11 is cooled, a coolant C is supplied to cooling unit 12. Then, referring to Fig. 4, coolant C is supplied from supply portion 34A to supply pipe 35. Specifically, coolant C is supplied to main supply pipe 37A. After that, coolant C enters main supply pipe 37B. Part of coolant C that has entered main supply pipe 37A enters branch pipes 37C, 37D, and 37E.

Coolant C that has entered branch pipes 37C, 37D, and 37E is supplied to the plurality of heat exchange plates 32 connected to branch pipes 37C, 37D, and 37E.

By supplying coolant C to the plurality of heat exchange plates 32, power storage cells 29 disposed between heat exchange plates 32 are cooled. On the other hand, coolant C flowing through heat exchange plate 32 is warmed by heat from power storage cell 29.

The plurality of heat exchange plates 32 are connected to branch pipes 38C, 38D, and 38E, and coolant C warmed in heat exchange plates 32 enters branch pipes 38C, 38D, and 38E.

Branch pipes 38C, 38D, and 38E are connected to main discharge pipe 38A, and coolant C passes through main discharge pipe 38A to be discharged from discharge portion 34B to the outside of housing case 10. Discharge portion 34B is connected to a radiator (not illustrated) or the like, and coolant C is cooled through heat exchange with the radiator or the like. After that, coolant C that has been cooled is supplied to supply portion 34A again.

A supply port of heat exchange plate 33 is connected to the end portion of main supply pipe 37B. When coolant C is supplied from main supply pipe 37B to heat exchange plate 33, heat exchange is performed between heat exchange plate 33 and electric device 13, and electric device 13 is cooled. A discharge port of heat exchange plate 33 is connected to the end portion of main discharge pipe 38B. Coolant C that flows out from the discharge port of heat exchange plate 33 enters main discharge pipe 38B.

Heat exchange plate 32 is disposed between the plurality of power storage cells 29 so as to face respective side surfaces of the plurality of power storage cells 29, which lie in a long-side direction (width direction W) and are each referred to as a long side surface hereinafter. Heat exchange plate 32 is provided so as to extend in the long-side direction of the long side surface of each of the plurality of power storage cells 29 (i.e. in width direction W).

Coolant C flows through heat exchange plates 32 and 33 and coolant pipe 31 of power storage device 2 configured as described above, and accordingly, heat exchange is performed between the plurality of power storage cells 29 and heat exchange plates 32 and performed between electric device 13 and heat exchange plate 33. Thus, when the plurality of power storage cells 29 generate heat, the plurality of power storage cells 29 can be cooled.

However, when in the above-described cooling unit 12 (heat exchange system) of power storage device 2, part of coolant C leaks from a connection portion between heat exchange plate 32, 33 and coolant pipe 31, the coolant that has leaked may adhere to power storage cell 29.

Thus, in the present embodiment, housing case 10 of power storage device 2 is provided with a partition wall disposed between coolant pipe 31 connected to heat exchange plates 32 and 33 and power storage cells 29 when viewed in the up-down direction.

According to this configuration, the partition wall is disposed between coolant pipe 31 and power storage cells 29 when viewed in the up-down direction, and accordingly, even when part of coolant C flows out from a connection portion between coolant pipe 31 and heat exchange plate 32, 33, adhesion of the coolant to power storage cell 29 can be hindered.

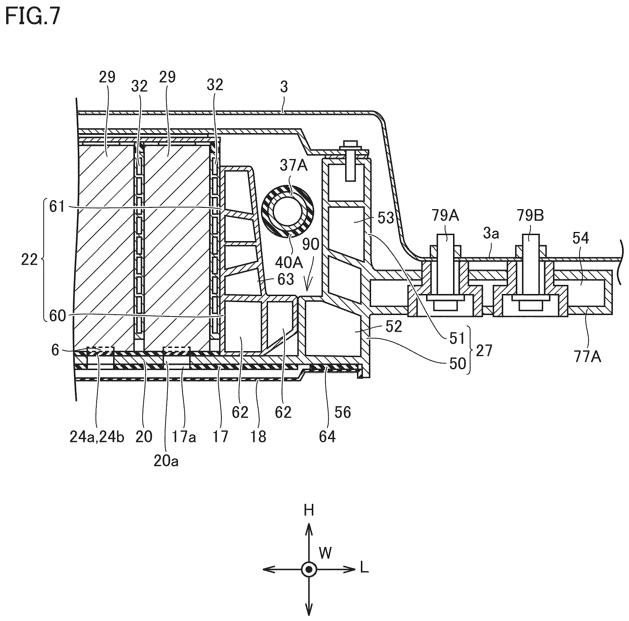

Fig. 7 is a cross-sectional view along line VII-VII in Fig. 4. End plate 27 is formed so as to extend upward from the outer peripheral edge portion of bottom plate 20.

Insulating plate 17 is fixed to the lower surface of bottom plate 20, and the outer peripheral edge portion of share panel 18 is fixed to the lower surface of bottom plate 20. A seal member 64 is disposed between the outer peripheral edge portion of share panel 18 and the lower surface of bottom plate 20.

End plate 27 includes a base portion 50 and a wall body 51, and fixing portion 77A is formed on the outer surface of end plate 27.

Base portion 50 is formed on the upper surface of bottom plate 20. Wall body 51 is formed so as to extend upward from base portion 50.

Base portion 50 is formed so as to project further than wall body 51 toward power storage cell 29. A hollow portion 52 is formed in base portion 50, and in addition, a plurality of hollow portions 53 are formed in wall body 51. The plurality of hollow portions 53 are formed so as to be arranged in up-down direction H. Moreover, a hollow portion 54 is formed in fixing portion 77A.

Fixing portion 77A is fixed to vehicle body 3 by fastening members 79A and 79B. For instance, vehicle body 3 includes side sills disposed apart from each other in width direction W, a cross member 3a connecting the side sills, and a floor panel, and fixing portion 77A is fixed to cross member 3a. Fixing portion 77A may be fixed to the floor panel.

Partition wall 22 includes a base portion 60 and a wall body 61. Base portion 60 is formed so as to project further than wall body 61 toward end plate 27. A side surface of partition wall 22 on the power storage cell 29 side is formed as a flat surface.

A plurality of hollow portions 62 are formed in base portion 60. Hollow portions 62 are arranged in front-rear direction L. A plurality of hollow portions 63 are formed in wall body 61. Hollow portions 63 are arranged in up-down direction H.

Base portion 60 of partition wall 22 and base portion 50 of end plate 27 are disposed so as to be in contact with each other. Thus, a depressed portion 90 is formed by partition wall 22 and end plate 27, and main supply pipe 37A is disposed in depressed portion 90.

In the cross section illustrated in Fig. 7, main supply pipe 37A is covered with thermal insulation member 40A. Main supply pipe 37A is disposed above base portion 60 and base portion 50. Depressed portion 90 is formed so as to extend in width direction W.

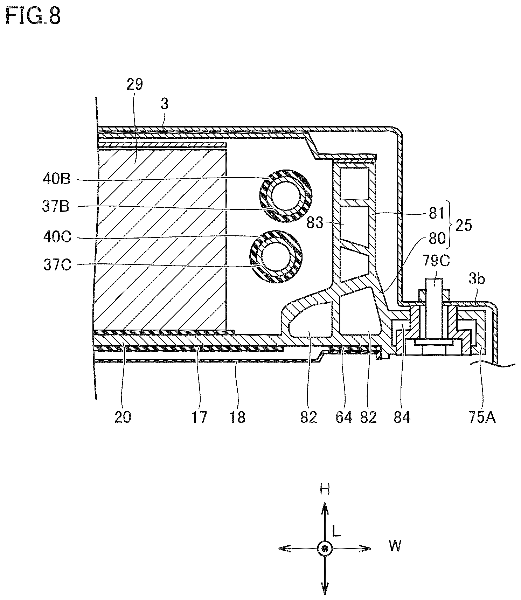

Fig. 8 is a cross-sectional view along line VIII-VIII in Fig. 4. As illustrated in Fig. 8, side wall 25 includes a base portion 80 formed on the upper surface of bottom plate 20, and a wall body 81 extending upward from base portion 80.

Base portion 80 is formed so as to project further than wall body 81 toward power storage cell 29. A plurality of hollow portions 82 are formed in base portion 80, and in addition, a plurality of hollow portions 83 are formed in wall body 81. The plurality of hollow portions 82 are formed so as to be arranged in width direction W, and the plurality of hollow portions 83 are formed so as to be arranged in up-down direction H.

Fixing portion 75A is formed so as to project in width direction W from the outer surface of side wall 25, and fixing portion 75A is fixed to a side sill 3b of vehicle body 3 by a fastening member 79C. Moreover, a hollow portion 84 is formed in fixing portion 75A.

In Fig. 8, main supply pipe 37B and branch pipe 37C are illustrated. As illustrated in Fig. 8, the outer surface of main supply pipe 37B is covered with thermal insulation member 40B. In addition, branch pipe 37C is covered with thermal insulation member 40C.

Power storage device 2 with the foregoing configuration is described.

When power storage module 11 is cooled in power storage device 2 configured as described above, coolant C is supplied to cooling unit 12.

Then, referring to Fig. 4, coolant C is supplied from supply portion 34A to supply pipe 35. Specifically, coolant C is supplied to main supply pipe 37A. After that, coolant C enters main supply pipe 37B, and part of coolant C that has entered main supply pipe 37A enters branch pipes 37C, 37D, and 37E.

Coolant C that has entered branch pipes 37C, 37D, and 37E is supplied to the plurality of heat exchange plates 32 connected to branch pipes 37C, 37D, and 37E.

By supplying coolant C to the plurality of heat exchange plates 32, power storage cells 29 disposed between heat exchange plates 32 are cooled. On the other hand, coolant C flowing through heat exchange plate 32 is warmed by heat from power storage cell 29.

In Fig. 7, main supply pipe 37A is disposed in depressed portion 90 formed by partition wall 22 and end plate 27. That is, when viewed in up-down direction H, partition wall 22 is disposed between main supply pipe 37A connected to heat exchange plate 32 and power storage cells 29.

Thus, when the coolant leaks from main supply pipe 37A, partition wall 22 avoids contact between the coolant and power storage cell 29, and accordingly, adhesion of the coolant to power storage cell 29 is hindered. The coolant that has flowed out from the pipe is collected between a bottom portion of depressed portion 90, end plate 27, and partition wall 22.

As described above, in power storage device 2 according to the present embodiment, partition wall 22 is disposed between main supply pipe 37A and power storage cells 29 when viewed in up-down direction H (that is, main supply pipe 37A is disposed opposite power storage cells 29 with partition wall 22 interposed in between), and accordingly, even when the coolant leaks from main supply pipe 37A, adhesion of the coolant to power storage cell 29 can be hindered. As a result, it is enabled to provide the power storage device in which the coolant used in the heat exchange system is hindered from adhering to a power storage element.

Variations are described below.

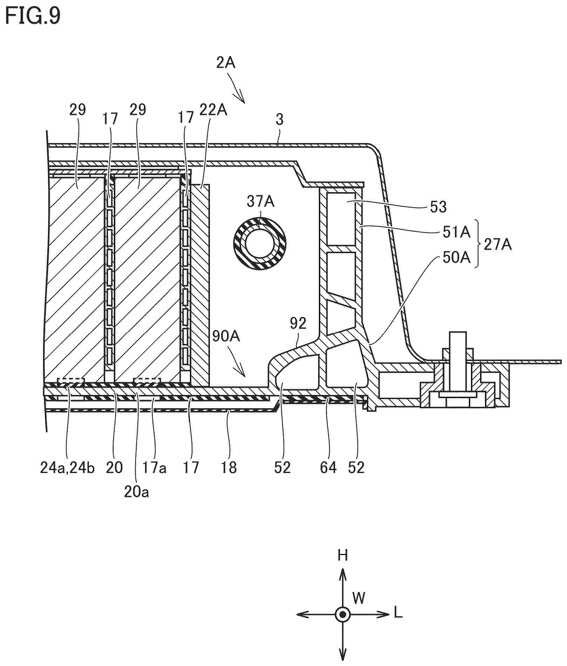

Although in the above-described embodiment, the case where partition wall 22 is provided between main supply pipe 37A and power storage cells 29 is described as an example, the configuration of partition wall 22 is not particularly limited to the configuration illustrated in Fig. 7. Variations of the partition wall provided between coolant pipe 31 and power storage cells 29 are described below with reference to Figs. 9, 10, 11, 12, 13, 14, 15, 16, and 17.

Fig. 9 is a diagram illustrating an example of a cross section of a power storage device 2A according to a variation. The configuration of power storage device 2A illustrated in Fig. 9 is the same as the configuration of power storage device 2 except the respective shapes of end plate 27 and partition wall 22, unless otherwise described below. Thus, detailed description thereof is not repeated.

As illustrated in Fig. 9, power storage device 2A includes a partition wall 22A and an end plate 27A. End plate 27A includes a base portion 50A and a wall body 51A. Base portion 50A is formed on the upper surface of bottom plate 20. Wall body 51A is formed so as to extend upward from base portion 50A.

Base portion 50A is formed so as to project further than wall body 51A toward power storage cells 29. Hollow portions 52 are formed in base portion 50A, and in addition, hollow portions 53 are formed in wall body 51A. Hollow portions 53 are formed so as to be arranged in up-down direction H.

An upper surface 92 of base portion 50A is provided with an inclined portion that is inclined downward as extending further from wall body 51A in front-rear direction L. Furthermore, in power storage device 2A, partition wall 22A is formed so as to extend along up-down direction H in a plate shape. A depressed portion 90A is formed by partition wall 22A, base portion 50A, and bottom plate 20. When the coolant drips onto upper surface 92, the inclined portion of upper surface 92 functions as a guide portion and guides the coolant to depressed portion 90A. Upper surface 92 is desirably disposed so as to overlap coolant pipe 31 when viewed in up-down direction H.

In power storage device 2A, part of coolant C that has leaked from main supply pipe 37A drips onto upper surface 92 and runs down upper surface 92 to flow to a bottom portion of depressed portion 90A between partition wall 22A and base portion 50A. Alternatively, part of coolant C that has leaked from main supply pipe 37A drips directly to the bottom portion of depressed portion 90A. Thus, partition wall 22A avoids contact between the coolant that has leaked and power storage cell 29, and accordingly, the coolant that has leaked from main supply pipe 37A is hindered from adhering to power storage cell 29. The coolant that has flowed out from the pipe is collected to the bottom portion of depressed portion 90A.

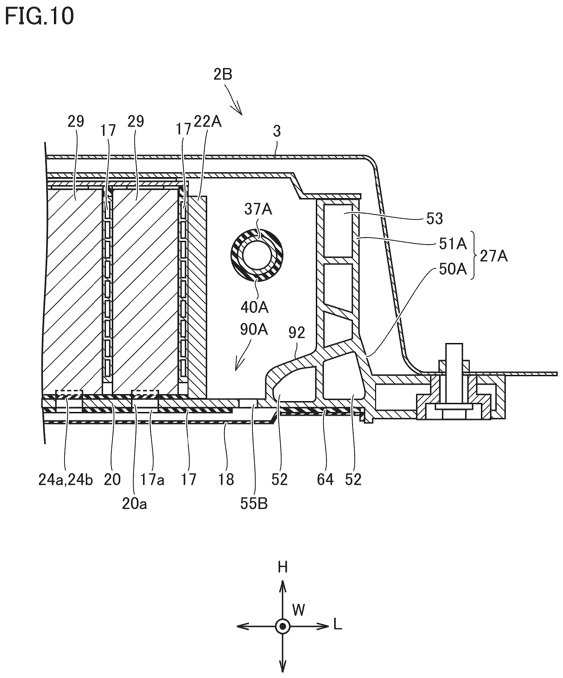

Fig. 10 is a diagram illustrating an example of a cross section of a power storage device 2B according to a variation. The configuration of power storage device 2B illustrated in Fig. 10 is the same as the configuration of power storage device 2A in Fig. 9 except the respective shapes of bottom plate 20 and insulating plate 17, unless otherwise described below. Thus, detailed description thereof is not repeated.

As illustrated in Fig. 10, power storage device 2B includes partition wall 22A and end plate 27A. In bottom plate 20, an opening 55B is formed between partition wall 22A and base portion 50A. Opening 55B is a through hole through which the space in depressed portion 90A and the space between share panel 18 and bottom plate 20 (insulating plate 17) communicate. For instance, opening 55B may be formed so as to extend along width direction W or openings 55B may each be formed in a predetermined shape, such as a circular shape, an elliptical shape, or a rectangular shape, while being formed so as to be spaced at predetermined intervals along width direction W. Opening 55B described above may be a through hole formed through bottom plate 20, and for instance, may be covered with a material having water absorbency, such as a water-absorbent sheet.

In power storage device 2B, part of coolant C that has leaked from main supply pipe 37A drips onto upper surface 92 and runs down upper surface 92 to flow to the bottom portion of depressed portion 90A. Alternatively, part of coolant C that has leaked from main supply pipe 37A drips directly to the bottom portion of depressed portion 90A. Since opening 55B is connected to the discharge passage between insulating plate 17 and share panel 18, the coolant that flows in depressed portion 90A flows into opening 55B to be stored in the space between share panel 18 and bottom plate 20. Thus, partition wall 22A and bottom plate 20 avoid contact between the coolant that has leaked and power storage cell 29, and accordingly, the coolant that has leaked from main supply pipe 37A is hindered from adhering to power storage cell 29. As a result, the coolant that has leaked can be hindered from inflicting an adverse effect on power storage cell 29.

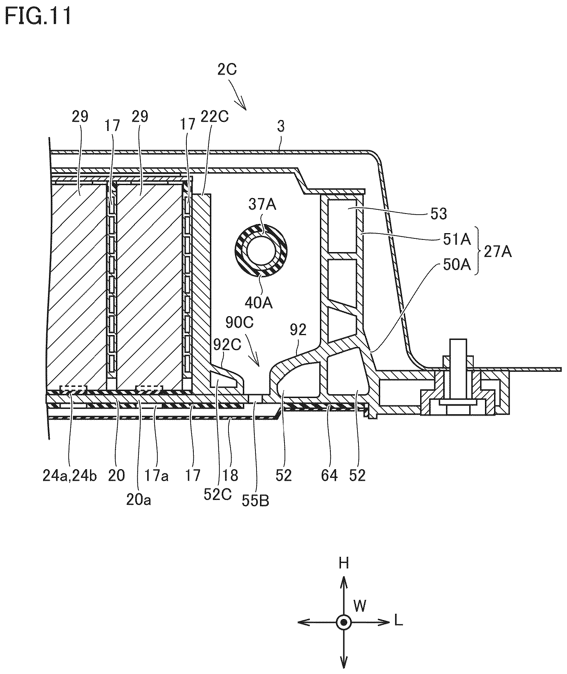

Fig. 11 is a diagram illustrating an example of a cross section of a power storage device 2C according to a variation. The configuration of power storage device 2C illustrated in Fig. 11 is the same as the configuration of power storage device 2B in Fig. 10 except the shape of partition wall 22A, unless otherwise described below. Thus, detailed description thereof is not repeated.

As illustrated in Fig. 11, power storage device 2C includes a partition wall 22C and an end plate 27A. In bottom plate 20, an opening 55B is formed between partition wall 22C and base portion 50A. Partition wall 22C is a plate-shaped member that, except its lower portion, extends along up-down direction H, and the lower portion is formed so as to project further toward end plate 27A than an upper portion and a middle portion of partition wall 22C. A hollow portion 52C is formed in the lower portion of partition wall 22C. An upper surface 92C of the projecting portion of the lower portion is provided with an inclined portion, which is inclined downward toward end plate 27A. A depressed portion 90C is formed by the projecting portion of the lower portion of partition wall 22C, bottom plate 20, and base portion 50A.

In power storage device 2C, part of coolant C that has leaked from main supply pipe 37A drips onto upper surface 92 and runs down upper surface 92 to flow to depressed portion 90C between partition wall 22C and base portion 50A. Alternatively, part of coolant C that has leaked from main supply pipe 37A drips onto upper surface 92C and runs down upper surface 92C to flow to depressed portion 90C. Alternatively, part of coolant C that has leaked from main supply pipe 37A drips directly to depressed portion 90C. Accordingly, the coolant that flows in depressed portion 90C flows into opening 55B to be stored in the space between share panel 18 and bottom plate 20. Thus, partition wall 22C and bottom plate 20 avoid contact between the coolant that has leaked and power storage cell 29, and as a result, the coolant that has leaked from main supply pipe 37A is hindered from adhering to power storage cell 29.

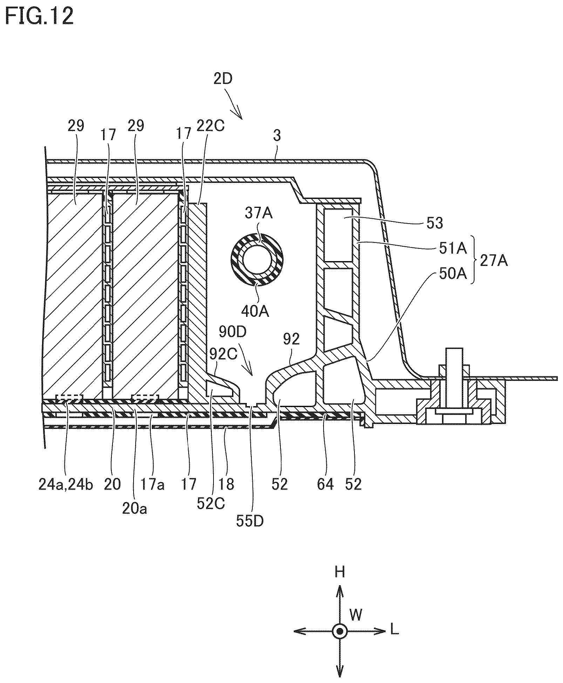

Fig. 12 is a diagram illustrating an example of a cross section of a power storage device 2D according to a variation. The configuration of power storage device 2D illustrated in Fig. 12 is the same as the configuration of power storage device 2C in Fig. 11 except that a groove portion 55D is formed in bottom plate 20 instead of opening 55B, unless otherwise described below. Thus, detailed description thereof is not repeated.

As illustrated in Fig. 12, power storage device 2D includes partition wall 22C and end plate 27A. In bottom plate 20, groove portion 55D with a depressed shape is formed between partition wall 22C and base portion 50A. Groove portion 55D with the depressed shape is formed, for instance, along width direction W, and an opening (not illustrated) penetrating bottom plate 20 along up-down direction H is formed in one end portion of bottom plate 20 in width direction W. In groove portion 55D, an inclined portion is formed, which is inclined downward toward the opening. The opening may also be formed in the other end portion of groove portion 55D. A depressed portion 90D is formed by the projecting portion of the lower portion of partition wall 22C, bottom plate 20, and base portion 50A.

In power storage device 2D, the coolant caused to flow in depressed portion 90D by being guided by upper surface 92 or upper surface 92C flows into groove portion 55D. The coolant that has flowed into groove portion 55D flows toward the one end portion while the inclined portion of groove portion 55D functions as a guide portion, and flows into the opening in the one end portion. The coolant that has flowed in through the opening is stored in the space between share panel 18 and bottom plate 20. Thus, partition wall 22C and bottom plate 20 avoid contact between the coolant that has leaked and power storage cell 29, and accordingly, the coolant that has leaked from main supply pipe 37A is hindered from adhering to power storage cell 29.

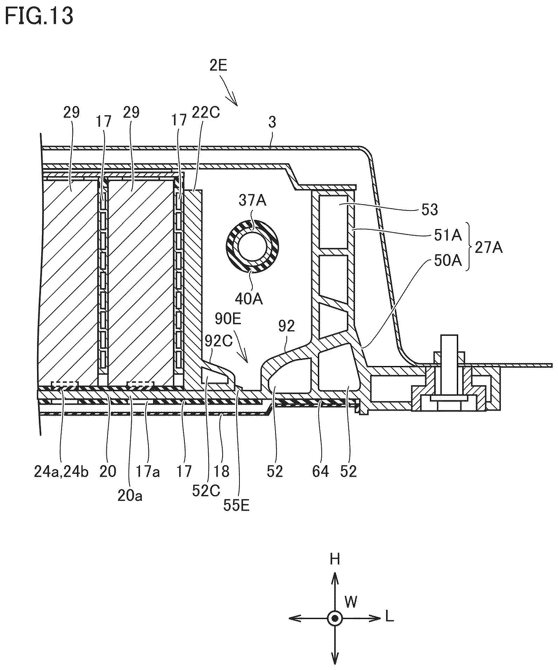

Fig. 13 is a diagram illustrating an example of a cross section of a power storage device 2E according to a variation. The configuration of power storage device 2E illustrated in Fig. 13 is the same as the configuration of power storage device 2D in Fig. 12 except that a projecting portion 55E is formed in bottom plate 20 instead of groove portion 55D, unless otherwise described below. Thus, detailed description thereof is not repeated.

As illustrated in Fig. 13, power storage device 2E includes partition wall 22C and end plate 27A. In bottom plate 20, projecting portion 55E with a projecting shape is formed between partition wall 22C and base portion 50A. Projecting portion 55E with the projecting shape is formed, for instance, along width direction W, and an opening penetrating bottom plate 20 along up-down direction H is formed in one end portion of bottom plate 20 in width direction W. An upper surface of projecting portion 55E is inclined downward toward base portion 50A. A depressed portion 90E is formed by the projecting portion of the lower portion of partition wall 22C, bottom plate 20, and base portion 50A.

In power storage device 2E, the coolant caused to flow in depressed portion 90E by being guided by upper surface 92 or upper surface 92C flows into the groove formed by projecting portion 55E, bottom plate 20, and base portion 50A. While the formed groove functions as a guide portion, the coolant that has flowed into the groove flows toward the one end portion, and flows into the opening in the one end portion. The coolant that has flowed in through the opening is stored in the space between share panel 18 and bottom plate 20. Thus, partition wall 22C and bottom plate 20 avoid contact between the coolant that has leaked and power storage cell 29, and accordingly, the coolant that has leaked from main supply pipe 37A is hindered from adhering to power storage cell 29.

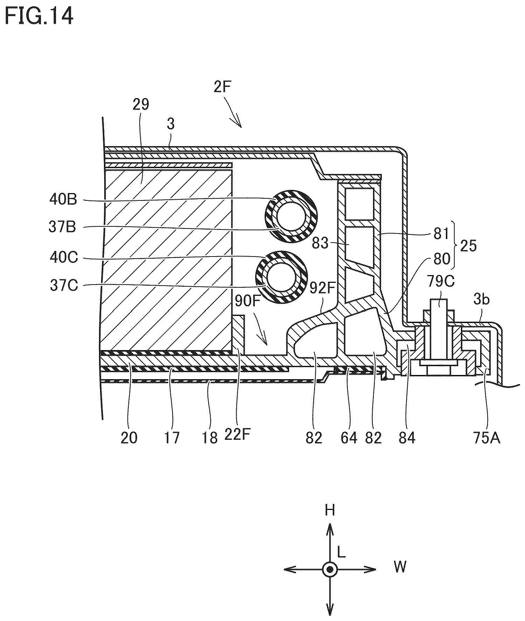

Fig. 14 is a diagram illustrating an example of a cross section of a power storage device 2F according to a variation. The configuration of power storage device 2F illustrated in Fig. 14 is the same as the configuration of power storage device 2 in Fig. 8 except that a partition wall 22F is formed, unless otherwise described below. Thus, detailed description thereof is not repeated.

As illustrated in Fig. 14, power storage device 2F further includes partition wall 22F. Partition wall 22F is formed so as to extend along up-down direction H in a plate shape. Partition wall 22F is formed, for instance, so as to have a height that does not allow partition wall 22F to come into contact with each of coolant pipe 3 1 and heat exchange plate 32. Furthermore, partition wall 22F is formed so as to extend along front-rear direction L. Partition wall 22F is formed, for instance, so as to extend from partition wall 22 to partition wall 23. A depressed portion 90F is formed by partition wall 22F, base portion 80, and bottom plate 20. A partition wall similar to partition wall 22F is also provided on the main discharge pipe 38A side. Detailed description is not repeated about the partition wall provided on the main discharge pipe 38A side.

In power storage device 2F, part of coolant C that has leaked from main supply pipe 37B, branch pipe 37C, a connection portion thereof, or the like drips onto an upper surface 92F and runs down upper surface 92F to flow to depressed portion 90F between partition wall 22F and base portion 80. Alternatively, part of coolant C that has leaked from main supply pipe 37B or the like drips directly to depressed portion 90F. Thus, partition wall 22F avoids contact between the coolant that flows in depressed portion 90F and power storage cell 29, and accordingly, the coolant that has leaked from main supply pipe 37B, branch pipe 37C, the connection portion thereof, or the like is hindered from adhering to power storage cell 29.

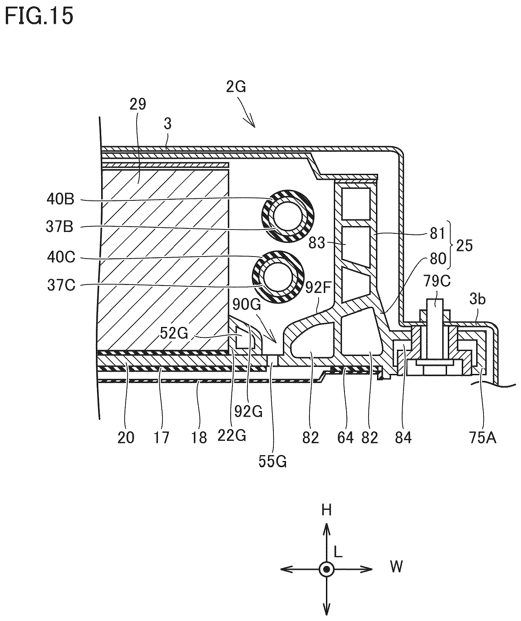

Fig. 15 is a diagram illustrating an example of a cross section of a power storage device 2G according to a variation. The configuration of power storage device 2G illustrated in Fig. 15 is the same as the configuration of power storage device 2F in Fig. 14 except that a partition wall 22G is included and that an opening 55G is formed, unless otherwise described below. Thus, detailed description thereof is not repeated.

As illustrated in Fig. 15, power storage device 2G includes partition wall 22G. In bottom plate 20, opening 55G is formed between partition wall 22G and base portion 80. Partition wall 22G includes a portion extending along up-down direction H and a portion formed so as to project toward side wall 25. A hollow portion 52G is formed in partition wall 22G. An upper surface 92G of the projecting portion of partition wall 22G is provided with an inclined portion, which is inclined downward toward side wall 25. A depressed portion 90G is formed by the projecting portion of partition wall 22G, bottom plate 20, and base portion 80. For instance, opening 55G may be formed so as to extend along front-rear direction L or openings 55G may each be formed in a predetermined shape, such as a circular shape, an elliptical shape, or a rectangular shape, while being formed so as to be spaced at predetermined intervals along front-rear direction L. A partition wall similar to partition wall 22G is also provided on the main discharge pipe 38A side. Detailed description is not repeated about the partition wall provided on the main discharge pipe 38A side.

In power storage device 2G, part of coolant C that has leaked from main supply pipe 37B, branch pipe 37C, or a connection portion thereof drips onto upper surface 92F and runs down upper surface 92F to flow to depressed portion 90G between partition wall 22G and base portion 80. Alternatively, part of coolant C that has leaked from main supply pipe 37B or the like drips onto upper surface 92G and runs down upper surface 92G to flow to depressed portion 90G between partition wall 22G and base portion 80. Alternatively, part of coolant C that has leaked from main supply pipe 37B drips directly to depressed portion 90G. Accordingly, the coolant that flows in depressed portion 90G flows into opening 55G to be stored in the space between share panel 18 and bottom plate 20. Thus, partition wall 22G avoids contact between the coolant that has leaked and power storage cell 29, and as a result, the coolant that has leaked from main supply pipe 37B or the like is hindered from adhering to power storage cell 29.

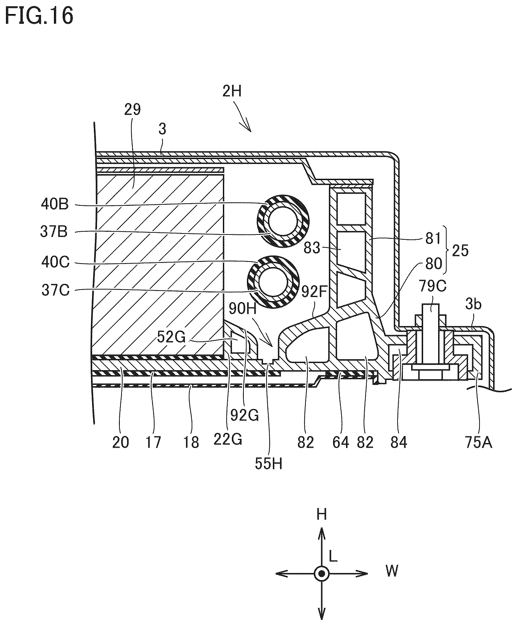

Fig. 16 is a diagram illustrating an example of a cross section of a power storage device 2H according to a variation. The configuration of power storage device 2H illustrated in Fig. 16 is the same as the configuration of power storage device 2G in Fig. 15 except that partition wall 22G is included and that a groove portion 55H is formed, unless otherwise described below. Thus, detailed description thereof is not repeated.

As illustrated in Fig. 16, power storage device 2H includes partition wall 22G and side wall 25. In bottom plate 20, groove portion 55H is formed between partition wall 22G and base portion 80. Groove portion 55H with a depressed shape is formed, for instance, along front-rear direction L, and an opening penetrating bottom plate 20 along the up-down direction is formed in one end portion of bottom plate 20 in front-rear direction L. Groove portion 55H is desirably formed so as to be inclined downward toward the opening. The opening may also be formed in the other end portion of groove portion 55H. A depressed portion 90H is formed by the projecting portion of partition wall 22G, bottom plate 20, and base portion 80.

In power storage device 2H, the coolant caused to flow in depressed portion 90H by being guided by upper surface 92F or upper surface 92G flows into groove portion 55H. The coolant that has flowed into groove portion 55H flows toward the one end portion and flows into the opening in the one end portion. The coolant that has flowed in through the opening is stored in the space between share panel 18 and bottom plate 20. Thus, partition wall 22G and bottom plate 20 avoid contact between the coolant that has leaked and power storage cell 29, and accordingly, the coolant that has leaked from main supply pipe 37B or the like is hindered from adhering to power storage cell 29.

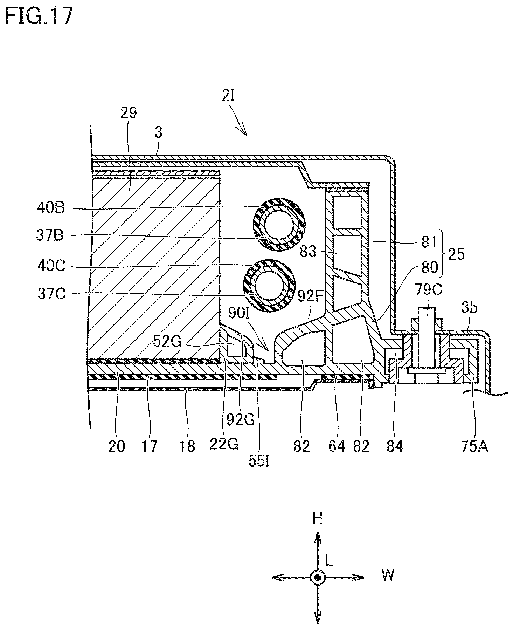

Fig. 17 is a diagram illustrating an example of a cross section of a power storage device 2I according to a variation. The configuration of power storage device 2I illustrated in Fig. 17 is the same as the configuration of power storage device 2H in Fig. 16 except that partition wall 22G is included and that a projecting portion 55I is formed in bottom plate 20 instead of groove portion 55H, unless otherwise described below. Thus, detailed description thereof is not repeated.

As illustrated in Fig. 17, power storage device 2I includes partition wall 22G and side wall 25. In bottom plate 20, projecting portion 55I with a projecting shape is formed between partition wall 22G and base portion 80. Projecting portion 55I is formed, for instance, along front-rear direction L, and an opening penetrating bottom plate 20 along the up-down direction is formed in one end portion of bottom plate 20 in front-rear direction L. A depressed portion 90I is formed by the projecting portion of partition wall 22G, bottom plate 20, and base portion 80.

In power storage device 2I, the coolant caused to flow in depressed portion 90I by being guided by upper surface 92F or upper surface 92G flows into a groove formed by projecting portion 55I, bottom plate 20, and base portion 80. The coolant that has flowed into the groove flows toward the one end portion and flows into the opening in the one end portion. The coolant that has flowed in through the opening is stored in the space between share panel 18 and bottom plate 20. Thus, partition wall 22G and bottom plate 20 avoid contact between the coolant that has leaked and power storage cell 29, and accordingly, the coolant that has leaked from main supply pipe 37B or the like is hindered from adhering to power storage cell 29.

The above-described variations may be implemented by combining all or part thereof as appropriate.

Although embodiments of the present disclosure have been described, it should be understood that the herein-disclosed embodiments are presented by way of illustration and example in all respects and are not to be taken by way of limitation. The scope of the present disclosure is defined by the claims and intended to include all changes within the purport and scope equivalent to the claims.

## Claims

1. A power storage device comprising:
a plurality of power storage elements (29);
a heat exchanger (32) disposed between the plurality of power storage elements (29) so as to face respective long side surfaces of the plurality of power storage elements (29) and extending in a long-side direction of the long side surface;
a coolant pipe (35, 36) through which a coolant flows to the heat exchanger (32); and
a housing (10) that houses the plurality of power storage elements (29), the heat exchanger (32), and the coolant pipe (35, 36), wherein
the housing (10) is provided with a partition wall (22, 22A, 22C, 22G) disposed between the coolant pipe (35, 36) connected to the heat exchanger (32) and the power storage element (29) when viewed in an up-down direction.

2. The power storage device according to claim 1, wherein a first through hole (55B, 55G) is formed in a bottom surface of the housing (10) lying opposite the plurality of power storage elements (29) with the partition wall (22A, 22G) interposed in between.

3. The power storage device according to claim 2, further comprising
a protection member (18) formed so as to cover a lower surface of the housing (10), wherein
the power storage element (29) includes a safety valve (6) provided on a lower surface of the power storage element (29), and
in the housing (10), a second through hole (17a, 20a) is formed under the safety valve (6).

4. The power storage device according to claim 2, wherein the partition wall (22C, 22G) includes an inclined portion (92C, 92G) formed so as to be inclined toward the first through hole (55B, 55G).

5. The power storage device according to claim 4, wherein a connection portion between the heat exchanger (32) and the coolant pipe (37A, 37B, 37C) is arranged so as to overlap the inclined portion (92C, 92G) when viewed in the up-down direction.

6. The power storage device according to claim 4, wherein the inclined portion includes a groove (55D) formed in the bottom surface of the housing (10) lying opposite the plurality of power storage elements (29) with the partition wall (22C) interposed in between.

7. The power storage device according to claim 4, wherein the inclined portion includes a projecting portion (55E) formed on the bottom surface of the housing (10) lying opposite the plurality of power storage elements (29) with the partition wall (22C) interposed in between.

8. The power storage device according to claim 2, further comprising
a discharge passage (18, 20) through which gas discharged from the plurality of power storage elements (29) is discharged, wherein
the first through hole (55B) is connected to the discharge passage (18, 20).
